# EUROPEAN PATENT APPLICATION

(11) **EP 4 841 523 A1**
(43) Date of publication of application: **18.11.2026**
(21) Application number: 26172731.7
(22) Date of filing: 16.04.2026
(51) Int. Cl.: G06N 10/40, G06N 10/20, G06N 10/80

(54) **METHOD FOR QPU RESOURCE ALLOCATION FOR QUANTUM CIRCUIT EXECUTION AND COMPUTING DEVICE FOR THE SAME**

(30) Priority: 12.05.2025 KR 20250061314
(71) Applicant: SDT Inc., Seoul 06211 (KR)
(72) Inventor: MIN, Byunghyun, Paju-si (KR); KIM, Eunsung, Gimpo-si (KR); YUNE, Jiwon, Gwacheon-si (KR)
(74) Representative: Manasse, Uwe

(57) **Abstract**

A method for allocating QPU resources for quantum circuit execution is disclosed, comprising the steps of: generating a quantum circuit based on given quantum circuit definition data; calculating a score for each of a plurality of QPUs using at least one term among a set of terms including an expected completion time of each QPU for the generated quantum circuit, a gate error rate of each QPU, and a cost of each QPU; selecting a QPU corresponding to the highest score among the plurality of scores calculated respectively for the plurality of QPUs; and registering the generated quantum circuit to a task queue of the selected QPU.

## Description

### Technical Field

The present invention relates to a QPU allocation method for quantum algorithms.

### Background Art

Quantum Processing Units (QPUs) differ in supported basis gate sets, operation speeds, coherence times, error rates, and qubit topologies depending on their physical implementation methods. For example, superconducting-based QPUs fundamentally support CNOT and CZ gates, while ion trap-based QPUs perform multi-qubit operations using the Mølmer-Sørensen gate (MS Gate). Furthermore, while a specific QPU may allow direct connections between all qubits, another QPU may only allow direct connections between certain adjacent qubits, requiring additional SWAP gate transformations. Due to these differences, the computational efficiency of the same quantum algorithm can vary significantly depending on the specific QPU on which it is executed. To secure optimal performance, customized QPU selection considering the hardware characteristics of each QPU is necessary.

### Detailed Description of the Invention

### Technical Problem

The present invention aims to provide a technology for selecting a suitable QPU to execute a given quantum algorithm.

### Technical Solution

<Quantum Computing and Classical Computing> Both quantum computing and classical computing are computing technologies that process data and perform operations, sharing common ground in utilizing algorithms to solve problems. Both computing methods require hardware and software and operate by receiving input data, performing operations, and outputting results. They can also be utilized in various fields of computer science, and the fact that they execute programs to solve specific problems is identical. However, there are fundamental differences between quantum and classical computing. Classical computing uses bits, which can only hold a state of 0 or 1, as the basic unit of representing information. In contrast, quantum computing uses qubits, and a qubit can maintain a superposition state, possessing both 0 and 1 states simultaneously. This is based on the principles of quantum mechanics and allows various calculations to be performed in parallel. Furthermore, while bits in classical computers exist independently, qubits in quantum computers can exhibit a property called entanglement. In an entangled state, when one qubit changes, the other entangled qubits are instantaneously affected. These characteristics allow quantum computing to demonstrate significantly more powerful performance than classical computers in solving certain problems. Due to these differences, classical computers are suitable for logical operations and general data processing, whereas quantum computers excel in solving specific problems such as complex optimization problems, prime factorization, and quantum simulations. For example, using Shor's algorithm, prime factorization can be performed much faster than on a classical computer, and using Grover's algorithm, data search speeds can be drastically improved. For these reasons, quantum computing operates in a completely different manner from existing classical computing and can provide highly powerful computational capabilities for specific problems. <Quantum Computing> Quantum computing consists of several important elements, and operations are performed through the relationships among them. The most fundamental unit of a quantum computer is the qubit, which stores information and performs operations. Qubits possess quantum mechanical properties such as superposition and entanglement, enabling parallel operations. A quantum gate performs the function of transforming the state of a qubit. Similar to how logic gates manipulate bits in classical computers, quantum gates alter the states of qubits. When multiple quantum gates are connected, they form a quantum circuit. A quantum circuit is a structure that performs specific operations and is designed so that qubits pass through multiple quantum gates to be transformed into a specific state. The device that executes these quantum circuits is the Quantum Processing Unit (QPU). The QPU contains physical qubits and controls them so the quantum circuit can be executed. Ultimately, quantum algorithms are designed by constructing quantum circuits, thereby solving specific problems. Therefore, a quantum algorithm is implemented based on a quantum circuit, the quantum circuit comprises multiple quantum gates, and the qubit serves as the fundamental unit performing these operations. Quantum gates and qubits can be physically implemented within an actual QPU. Although a qubit is theoretically a basic unit for storing and manipulating quantum states, specific physical systems must be used to actually implement it in hardware. Once a qubit is implemented, quantum gates must be physically applied to manipulate it. Quantum gates perform operations that transform qubit states, and the method of applying quantum gates varies depending on how the qubit is implemented. Superconducting qubits maintain and manipulate quantum states using superconducting circuits. Superconducting qubits are implemented based on a special superconducting device called a Josephson Junction. They can manipulate states and perform quantum gate operations using microwave pulses. In superconducting qubits, microwave pulses are used to transform the state of the qubit. When a microwave signal of a specific frequency is applied to a qubit, the qubit rotates in a specific manner, changing its state. Ion trap qubits use electric and magnetic fields to trap individual ions and manipulate their states using lasers. After placing ionized atoms in an electric field, quantum states are manipulated using specific laser frequencies. In ion trap qubits, specific laser beams are used to apply quantum gates. By adjusting the intensity and frequency of the laser pulses, the qubit state can be changed, and if two or more qubits are entangled, entanglement operations can also be performed. Photonic qubits store and transmit information using light (photons) and can be well integrated with existing communication technologies. Photonic qubits express 0 and 1 using specific polarization states (e.g., vertical and horizontal polarization), and quantum gate operations are performed using optical components. In photonic qubits, quantum gates are implemented by changing the polarization state of light or shifting its phase. Specific optical components (polarizing beam splitters, phase shifters, etc.) can be used to manipulate the state of the qubit. Silicon-based qubits maintain quantum states using electrons or nuclear spins within silicon semiconductor devices. They have high scalability due to their high compatibility with existing semiconductor technologies. In silicon-based qubits, quantum gates are applied by controlling electron or nuclear spins. Spin states can be changed in specific ways by applying magnetic fields or using microwave signals. Topological qubits store information using quasiparticles called Majorana fermions. They are theoretically known to have high stability and low error rates. In topological qubits, quantum gates can be implemented by changing specific topological states. <Quantum Computing Hardware> Quantum computing hardware is the physical device that performs quantum operations, consisting of qubits and systems that control them. One of the core elements of the hardware is the QPU, which performs operations by manipulating qubits and applying quantum gates. Operations executed in the QPU are based on quantum circuits. A quantum circuit represents a logical operational design and determines how qubits will be transformed. A quantum circuit consists of multiple quantum gates, each serving to change the state of a qubit in a specific way. These quantum circuits are implemented as part of a quantum algorithm to solve specific problems. That is, quantum algorithms are written based on quantum circuits and operate by combining multiple quantum gates to solve a problem. The hardware is responsible for allowing these operations to be actually executed, and the qubit functions as the most fundamental information unit for these operations. <Quantum Computing Software> Quantum computing software provides a programming environment that supports the implementation and execution of quantum algorithms. Quantum computing software is mainly executed on classical computers, allowing users to design and simulate quantum circuits or execute them on actual QPUs. Quantum assembly languages are closely related to quantum software and define instructions for performing quantum operations at the hardware level. Representative examples include OpenQASM, Quil, and Cirq. These assembly languages are used in quantum software to directly define quantum circuits. Furthermore, quantum software is closely related to JupyterLab and Quantum Composer. JupyterLab provides an interactive environment for research and development, and Quantum Composer is a GUI-based tool for designing and simulating quantum circuits. These tools allow users to program and simulate quantum algorithms using quantum software. Quantum software is also related to QASM (Quantum Assembly Language), which is a low-level language used to describe quantum circuits. This allows quantum algorithms designed in software to be converted so they can be executed on actual hardware. Quantum software is also related to basis gate decomposition. Basis gate decomposition is the process of converting complex quantum gates into fundamental quantum gates (Basis Gates) so they can be executed on specific hardware. Through this, quantum software supports converting algorithms into hardware-optimized formats for execution.

<Quantum Computing Hardware and Quantum Emulators> Quantum computing hardware and quantum emulators have a complementary relationship. Quantum computing hardware is a device that performs operations based on actual physical qubits and can be implemented in various ways, such as superconducting qubits, ion traps, photonic qubits, and silicon-based qubits. This hardware applies quantum gates and manipulates qubit states to perform operations. Conversely, a quantum emulator is a software system that simulates quantum operations on a classical computer without an actual quantum computer. That is, it functions to execute quantum algorithms and predict results using classical computational methods without using a physical QPU. Quantum emulators allow researchers to design and experiment with quantum algorithms, playing an important role in verifying algorithms before executing them on actual hardware. Researchers can first use an emulator to test a quantum algorithm, design an optimized circuit, and then execute it on actual quantum hardware to verify the results. Additionally, because current quantum hardware has high error rates and a limited number of qubits, emulators are essentially used to test more complex quantum algorithms. Therefore, emulators can be used as research and simulation tools until the hardware matures. <Quantum Algorithms and Classical Algorithms> Quantum algorithms and classical algorithms are fundamentally different in how they solve problems and perform operations. Classical algorithms process data sequentially or in parallel and perform operations at the bit level (0 or 1). Conversely, quantum algorithms can calculate multiple states simultaneously by utilizing superposition and entanglement, and can maximize parallel operations using qubits. Classical algorithms are suitable for general data processing and logical operations and are widely used in current computing environments. For example, sorting algorithms, graph search algorithms, and machine learning models are mostly implemented using classical methods. However, for certain problems, classical algorithms may require extremely long computation times, at which point quantum algorithms can demonstrate powerful performance. Quantum algorithms can provide significantly faster speeds than classical algorithms for certain problems. For instance, Shor's algorithm can calculate exponentially faster than classical algorithms for the problem of prime factorization of large integers. Furthermore, while Grover's algorithm solves database search problems at an O(√N) speed compared to the O(N) time complexity of classical algorithms. These algorithms demonstrate that quantum computers can outperform existing computers in specific problems. However, quantum algorithms are not superior to classical algorithms for all problems. For most everyday data processing and calculations, classical algorithms remain efficient, and quantum computers are likely to be utilized in ways optimized for specific problems. Therefore, quantum and classical algorithms have a complementary relationship, evolving in a way that utilizes the strengths of each to solve various problems. <Quantum Circuit> A quantum circuit is a logical structure that manipulates the states of qubits and performs operations; it is the fundamental element for designing quantum computer operations. Just as classical logic circuits process data using gates like AND, OR, and XOR, quantum circuits use quantum gates to change qubit states and perform specific operations. Quantum circuits play an essential role in implementing quantum algorithms. A quantum circuit has a structure that transforms the states of input qubits and returns them as output states. The input-output relationship is determined through quantum gates, configured to execute specific quantum algorithms. The data input into a quantum gate is represented as the state of a qubit. After passing through a quantum gate, the output data is also represented as a qubit state. The input qubit state undergoes a specific transformation and is changed to a new state, which can then be passed to another quantum gate or finally measured.

Quantum circuits range from simple 1-qubit circuits to complex circuits containing multiple qubits. For example, a circuit generating a Bell State entangles two qubits and is used as a fundamental element in quantum communication and computing. Quantum circuits can be represented using matrix operations. For example, the Hadamard gate (H) uses a matrix to transform a qubit's state. Just as classical logic gates perform basic logic operations (AND, OR, XOR), quantum gates-the components of a quantum circuit-perform specific logical transformations. However, the difference lies in the fact that classical logic gates process only 0s and 1s, whereas quantum gates can maintain superposed states. Combining multiple quantum gates can form a single quantum circuit. A quantum circuit is designed to perform specific operations, and executing a desired quantum algorithm is possible through combinations of multiple quantum gate stages. For example, a quantum circuit generating a Bell state creates an entangled state by combining a Hadamard gate and a CNOT gate. Quantum algorithms are structured by combining multiple quantum gates to solve specific problems. For example, Shor's algorithm combines multiple quantum gates including the Quantum Fourier Transform, and Grover's algorithm requires a quantum circuit that performs iterative rotation operations. Thus, quantum algorithms are implemented through combinations of quantum gates. <Basis Gates> Basis gates refer to the set of quantum gates fundamentally provided by a specific QPU. All quantum gates can basically be implemented through combinations of basis gates, similar to the concept of basic logic gates (AND, OR, NOT) in classical computers. The reason basis gates are necessary is that different QPUs support different gate sets. Not all quantum gates can be directly executed on every QPU, and some gates must be implemented through combinations of other basis gates. Therefore, utilizing a specific set of basis gates to construct an optimized quantum circuit is important for efficient quantum operations. The concept of basis gates applies universally across all quantum computers, but the actual basis gates used vary by QPU. For example, IBM's QPU uses basis gates such as CX (CNOT), U3, U2, and U1, while Google's Sycamore processor uses specific two-qubit gates as its basis gates. Basis gates are used as fundamental operational units, and all quantum gates can be expressed through combinations of basis gates. Meanwhile, a Universal Gate set refers to the minimum set of gates capable of performing all quantum operations. That is, using a specific Universal Gate set allows the construction of any arbitrary quantum circuit. Basis gate decomposition refers to the process of transforming specific quantum gates into combinations of basis gates. Because the basis gates supported by each QPU differ, complex quantum gates must be transformed to be executable on a specific QPU. Through this, circuits can be optimized into a form executable on the hardware. Basis gate decomposition operates by breaking down a given gate into a series of basis gate operations. Matrix operations and optimization algorithms are used for this. For instance, a Toffoli Gate (a 3-qubit controlled gate) can be implemented through a combination of basis gates like CX, H, and T. This allows it to be converted into an executable format on the QPU. Fundamentally, all quantum gates can be implemented through specific basis gate combinations and are transformed into QPU-executable forms utilizing optimized decomposition techniques. <Quantum Processor> A Quantum Processing Unit (QPU) is a hardware device that manipulates qubit states and performs operations. It is similar to a CPU in classical computers but is designed to maintain and manipulate quantum states. The QPU controls the behavior of qubits and enables the execution of specific quantum algorithms. A QPU contains physical qubits and serves to manipulate and control their states. Qubits are implemented by specific hardware technologies within the QPU and perform operations by applying quantum gates. There are various types of QPUs depending on the implementation method. The QPU receives qubit states as input, performs quantum gate operations, and ultimately outputs results.

The output results are interpreted by measuring the qubits and converting them into 0s or 1s. The operation of a QPU can be expressed using matrix operations and Dirac Notation, allowing the mathematical modeling of qubit states. While similar to a classical CPU, a QPU fundamentally differs in that it performs qubit operations. A CPU performs transistor-based logical operations, whereas a QPU performs operations by manipulating quantum states. <QPU Market> The QPU product and service market has been growing rapidly over the past few years, with various technological approaches and business models emerging. Many companies are accelerating competition by releasing commercial QPUs, and cloud-based quantum computing services (QaaS, Quantum as a Service) are actively provided. One of the major trends in the current QPU market is the expansion of cloud-based quantum computing services. Rather than enterprises and research institutions owning physical QPUs directly, it is becoming common practice to utilize QPUs remotely via the cloud. Services like Amazon Braket, IBM Quantum Experience, and Google Quantum AI are prime examples. This trend reduces the burden of building hardware infrastructure and makes quantum computing more accessible. Furthermore, improving and optimizing QPU performance is another key market trend. QPU performance is limited by factors such as coherence time and gate error rate, and research continues to improve these. Companies are focusing on securing more stable qubits, strengthening error correction, and developing higher-scale QPUs. The business structure of QPU products and services can largely be divided into hardware manufacturing, cloud services (QaaS), and software/development tool provisioning. Traditionally, hardware manufacturers developed and supplied QPUs to the market, but as cloud-based services have grown, business models have diversified. QPU manufacturers are companies that build the actual physical hardware, while QaaS providers are companies that offer this hardware as a service accessible via the cloud.

Tool providers develop programming environments and simulation tools to facilitate QPU utilization. For example, IBM is both a QPU manufacturer and a QaaS provider, while also offering a development tool called Qiskit. Conversely, Amazon Braket does not develop its own QPUs but integrates hardware from other QPU manufacturers to provide cloud services. Hardware manufacturers (QPU manufacturers) develop QPUs and sell them to research institutions/enterprises or provide them through cloud platforms. QaaS providers operate a business model that offers QPUs remotely via cloud platforms. Current QPU access services are cloud-based, allowing users to call upon QPUs to perform operations when needed. Representative platforms currently providing QaaS include Amazon Braket, IBM Quantum Experience, Google Quantum AI, and Microsoft Azure Quantum. They provide APIs and development environments for remote QPU utilization and include simulator features for experiments and research. Tool providers are companies that develop software and tools enabling the utilization of QPUs, supporting the design and simulation of quantum algorithms. <QPU Competency> QPU competency is governed by hardware physical characteristics, algorithm optimization, and error correction techniques. QPU performance management can be jointly handled by hardware manufacturers, cloud service providers, and research institutions. Manufacturers improve physical hardware performance, service providers establish optimal execution environments, and research institutions evaluate algorithm performance. QPU competency data is collected through experimental methods and theoretical analysis. Experimentally, it involves executing specific algorithms on a QPU and analyzing the accuracy of the results, while theoretically, performance can be predicted using noise modeling and simulations. QPU manufacturers generally provide information on the processor's qubit count, coherence time, gate error rates, execution speed, etc. Various measurement techniques are used to evaluate QPU competency.

Typical methods include measuring hardware coherence times (T1, T2), analyzing gate error rates, evaluating execution speeds, and assessing noise levels. Through this, one can analyze how accurately a QPU can execute a specific quantum algorithm. T1 refers to the time it takes for a qubit to return to its ground state (relaxation time), and T2 refers to the time a qubit can maintain its quantum information (dephasing time). Higher values indicate that more stable operations are possible. If T1 and T2 values are low, the quantum state collapses quickly, preventing accurate operations. Therefore, maintaining high T1 and T2 values is critical to improving QPU performance. <Errors occurring in QPUs and Emulators> In a quantum computing environment, various types of errors can occur due to hardware limitations. Errors occurring in QPUs primarily originate from hardware imperfections, where operations may not execute accurately due to noise, environmental factors, and qubit interactions. Typical QPU errors include gate errors, measurement errors, and state loss due to reduced coherence times. Conversely, errors occurring in emulators are not caused by hardware issues but by software limitations. Although emulators are designed to simulate perfect quantum operations, they might not accurately mimic realistic hardware. Therefore, results executed on an emulator are highly likely to be theoretically ideal results and may exhibit much higher accuracy than when executed on an actual QPU. While QPU errors are unavoidable because the system operates in an environment containing noise, emulators can model this noise to support users in testing more realistic quantum operations. Thus, when developing quantum algorithms, a process of first testing on an emulator and then executing on an actual QPU to verify hardware limits is necessary. <Quantum Assembly Language> Quantum Assembly Language is a low-level programming language that defines quantum circuits so machines can execute them. Currently, several types of quantum assembly languages are widely used in the quantum computing market, each developed based on specific platforms and hardware. OpenQASM (Open Quantum Assembly Language) is developed by IBM and is used when writing and executing quantum circuits via Qiskit. OpenQASM is designed to be hardware-independent, allowing it to be converted for execution on various QPUs. Quil (Quantum Instruction Language) is developed by Rigetti Computing and is used to construct and execute quantum circuits using the Forest SDK and PyQuil. It specifically includes features supporting hybrid quantum-classical algorithms. Cirq Assembly Language is used in Google's Cirq framework and is designed to execute on Google's quantum hardware, including the Sycamore processor. Q Assembly Language, developed by Microsoft, contains its own proprietary quantum assembly instruction set and can be executed via Azure Quantum. Blackbird is an assembly language for quantum photonic computing developed by Xanadu, used within the Strawberry Fields framework. These quantum assembly languages are optimized based on specific quantum processors, and users can write and execute quantum circuits by selecting the language appropriate for their chosen platform. Quantum assembly languages are currently being independently developed and provided by major quantum computing companies. Companies like IBM, Google, Microsoft, Rigetti, and Xanadu provide assembly languages optimized for their respective processors and development tools, supporting users in developing quantum algorithms based on them. IBM supports Qiskit users in easily designing and executing quantum circuits via OpenQASM, while Google utilizes Cirq to perform optimized quantum operations on its own QPU, Sycamore. Currently, while each company optimizes assembly languages tailored to its own hardware, there are also movements to provide more standardized quantum programming interfaces. Notably, OpenQASM and Quil are evolving to enhance interoperability between hardware so they can execute on diverse QPUs. As quantum computing technology advances, discussions on standardizing quantum assembly languages are actively occurring. Although major companies are currently developing proprietary languages, it is necessary in the long term to establish common standards to provide consistent execution environments across various hardware. OpenQASM is currently the most widely used quantum assembly language, with IBM leading efforts to make it usable across multiple platforms. Moreover, OpenQASM 3.0 provides expanded features compared to previous versions and is being developed for use on a wider variety of QPUs. Meanwhile, organizations like the Quantum Open Source Foundation (QOSF) are conducting research to establish open standards for quantum computing and exploring ways to increase interoperability between programming languages. If these standardization efforts continue, a universal quantum assembly language not dependent on specific vendors is highly likely to emerge in the future. In conclusion, quantum assembly languages are currently being developed and used by various companies and research institutions, evolving in ways optimized for each hardware platform. According to one aspect of the present invention, a method for allocating QPU resources for quantum circuit execution may be provided, comprising: generating, by a computing device, a quantum circuit based on given quantum circuit definition data; calculating, by the computing device, a score for each of a plurality of QPUs using at least one term among a set of terms including an Expected Completion Time (ECT) of each QPU for the generated quantum circuit, a gate error rate of each QPU, and a cost of each QPU; selecting, by the computing device, a QPU corresponding to the highest score among the plurality of scores calculated respectively for the plurality of QPUs; and registering, by the computing device, the generated quantum circuit to a task queue of the selected QPU. Here, the at least one term may include the expected completion time of each QPU for the generated quantum circuit. Here, the at least one term may include a term representing a coherence penalty defined based on the coherence time of each QPU. Here, the coherence penalty may be determined based on the relative length of the expected completion time of each QPU required to execute the generated quantum circuit compared to the average coherence time of each QPU. Here, the step of calculating the score may include: transforming the quantum gates constituting the generated quantum circuit into a combination of basis gates supported by each QPU to reconstruct it into an executable quantum circuit on each QPU; and determining the expected completion time of each QPU required for executing the generated quantum circuit based on the operational execution time of each of the basis gates constituting the reconstructed quantum circuit. Here, when the expected completion time of each QPU is greater than a predetermined threshold, the coherence penalty may increase as the expected completion time of each QPU increases. Here, the expected completion time may include the total operation time of each QPU required to execute the generated quantum circuit and the current wait time in the task queue of each QPU. Here, the method for allocating QPU resources for quantum circuit execution may further include, after the step of registering the quantum circuit: monitoring, by the computing device, the execution of the generated quantum circuit on the selected QPU; and registering, by the computing device, the generated quantum circuit to the task queue of a different QPU if an unexpected error or delay is detected during monitoring. Here, in the step of calculating the score, the score for each of the plurality of QPUs may be calculated using a weighted sum of terms selected from a set of terms including the Expected Completion Time (ECT) of the corresponding QPU for the generated quantum circuit, the gate error rate of the corresponding QPU, and the cost of the corresponding QPU. Here, the score may include a minimum-time score calculated based on the expected completion time of each QPU for the quantum circuit, where the minimum-time score is calculated based on the sum of expected operation times required to execute the quantum circuit on each QPU. Here, the score may be determined based on a weighted sum of the minimum-time score, a minimum-cost score according to the usage cost of each QPU, and a minimum-error score considering the stability of the circuit execution time relative to the coherence time. Here, the step of calculating the score may further include adjusting the number of iterations for executing the quantum circuit according to the gate-specific operation times or coherence times of each QPU. Furthermore, the step of adjusting the number of iterations of the quantum circuit may include at least one of: determining the number of iterations according to a predefined mapping table by an iteration count adjustment unit; and adjusting the number of iterations based on real-time feedback data from the user side. Here, the step of calculating the score may include automatically changing the number of iterative operations for each QPU according to an adjustment method that reflects the relationship with gate-specific execution times or coherence times. And this adjustment of the iteration count may be applied in a way that dynamically calibrates the minimum-time score value. Here, by analyzing the relative relationship between the expected completion time of each QPU and the coherence time of each QPU, the stability criterion in the minimum-error score can be calibrated by reducing or increasing the number of iterations of the quantum circuit for each QPU. According to another aspect of the present invention, a computing device may be provided comprising memory storing instructions for allocating QPU resources for quantum circuit execution. Here, when the instructions are executed by the computing device, the computing device is configured to: generate a quantum circuit based on given quantum circuit definition data; calculate a score for each of a plurality of QPUs using at least one term among a set of terms including an Expected Completion Time (ECT) of the corresponding QPU for the generated quantum circuit, a gate error rate of the corresponding QPU, and a cost of the corresponding QPU; select a QPU corresponding to the highest score among the plurality of scores calculated respectively for the plurality of QPUs; and register the generated quantum circuit to a task queue of the selected QPU. Here, the at least one term may include the expected completion time of each QPU for the generated quantum circuit. Here, the at least one term may include a coherence penalty term defined based on the coherence time of the corresponding QPU. Here, the coherence penalty may be determined based on the relative length of the expected completion time of each QPU required to execute the generated quantum circuit compared to the average coherence time of each QPU. Here, the process of calculating the score may include a process of transforming the quantum gates constituting the generated quantum circuit into a combination of basis gates supported by the corresponding QPU to reconstruct an executable quantum circuit on the corresponding QPU, and a process of determining the operation time of the corresponding QPU required to execute the generated quantum circuit based on the operational execution time of each of the basis gates constituting the reconstructed quantum circuit. Here, when the instructions are executed by the computing device, the computing device may be configured to monitor the execution of the generated quantum circuit on the selected QPU, and if an unexpected error or delay is detected during the monitoring, register the generated quantum circuit to the task queue of another QPU.

Here, in the process of calculating the score, the score for each of the plurality of QPUs may be calculated using a weighted sum of terms selected from a set of terms including the Expected Completion Time (ECT) of the corresponding QPU for the generated quantum circuit, the gate error rate of the corresponding QPU, and the cost of the corresponding QPU.

### Effects of Invention

According to the present invention, a technology can be provided to select a suitable QPU to execute a given quantum algorithm.

### Brief Description of Drawings

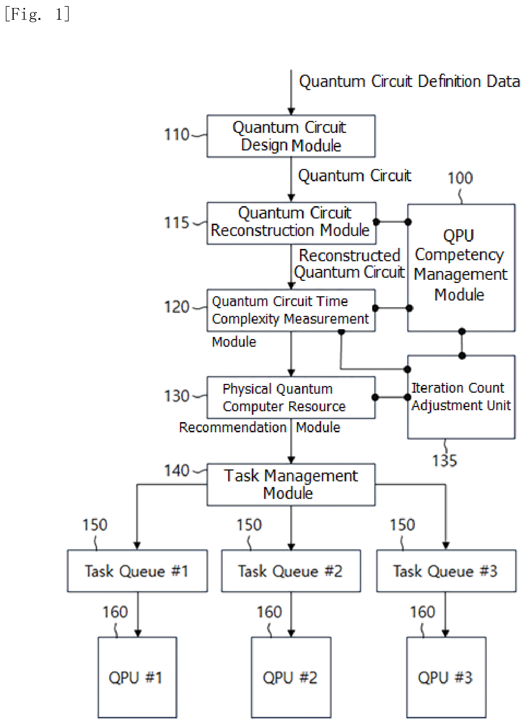

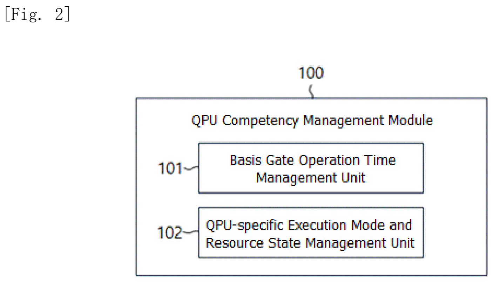

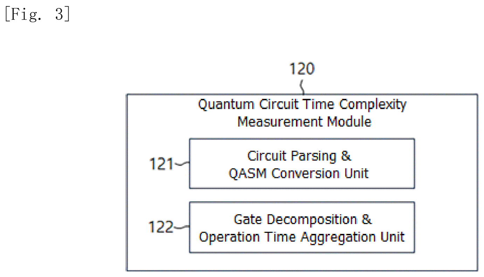

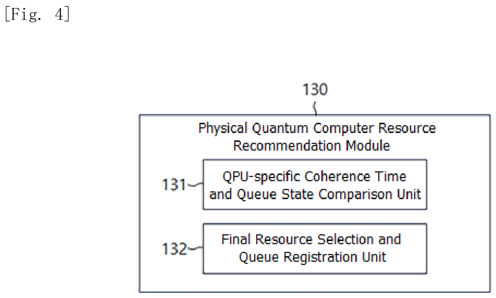

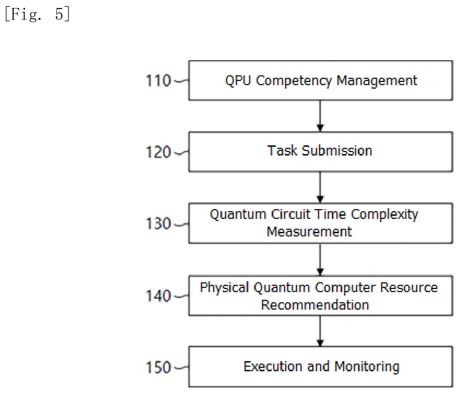

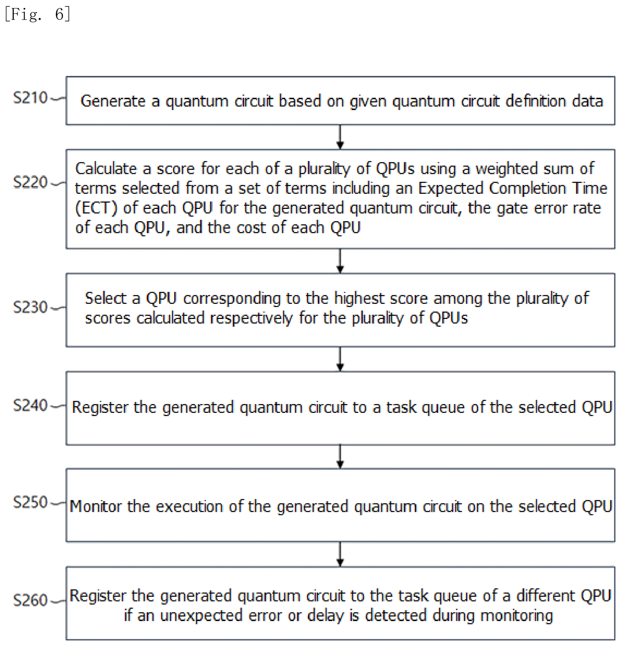

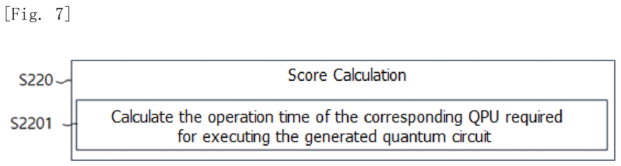

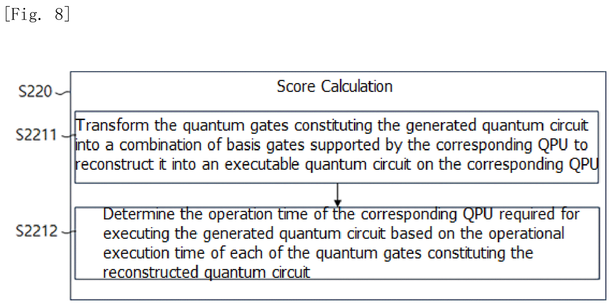

FIG. 1 is a system architecture illustrating a workflow for executing a quantum circuit provided according to an embodiment of the present invention. FIG. 2 shows the configuration of a QPU competency management module provided according to an embodiment of the present invention. FIG. 3 shows the configuration of a quantum circuit time complexity measurement module provided according to an embodiment of the present invention. FIG. 4 shows the configuration of a physical quantum computer resource recommendation module provided according to an embodiment of the present invention. FIG. 5 is a flowchart illustrating an adaptive QPU allocation method for quantum circuit execution provided according to an embodiment of the present invention. FIG. 6 is a flowchart illustrating a method for allocating QPU resources for quantum circuit execution provided according to an embodiment of the present invention. FIG. 7 is a flowchart embodying an embodiment of the step of calculating a score shown in FIG. 6. FIG. 8 is a flowchart embodying another embodiment of the step of calculating a score shown in FIG. 6.

### Detailed Description for Carrying Out the Invention

Hereinafter, embodiments of the present invention will be described with reference to the accompanying drawings. However, the present invention is not limited to the embodiments described in this specification and may be implemented in various other forms. The terminology used in this specification is intended to aid understanding of the embodiments and is not intended to limit the scope of the invention. Furthermore, singular forms used herein include plural forms unless the context clearly indicates the opposite meaning. FIG. 1 is a system architecture illustrating a workflow for executing a quantum circuit provided according to an embodiment of the present invention. According to FIG. 1, it can be explained step-by-step what processes a quantum circuit undergoes after it is designed until it is executed. The quantum circuit design module (110) designs a quantum circuit based on circuit definition data received from a user, and a 'quantum circuit' may be provided as its output. The quantum circuit design module (110) can convert the user-defined quantum circuit into an executable format. The given quantum circuit can be represented in quantum assembly languages like OpenQASM, Quil, Cirq, etc., and can be converted into an appropriate data format for subsequent execution. The quantum circuit design module (110) may run on a general classical computer (e.g., server, workstation, cloud infrastructure, etc.), and software such as JupyterLab, Qiskit, and Cirq may be utilized in the quantum circuit design module (110). The quantum circuit design module (110) performs the function of designing a quantum circuit based on circuit definition data input from the user or an external system. Here, the circuit definition data may include the number of qubits required to construct the quantum circuit, gate arrangements, circuit connection structures, parameter values, control logic, and instruction sets according to the selected quantum assembly language (OpenQASM, Quil, Cirq, etc.). The quantum circuit design module (110) processes this input data to create a structured quantum circuit object executable on hardware or a simulator, and its output may include the following items: First, as logical circuit information configured at the qubit level, it can be included as the Quantum Circuit Object itself, which is the basic unit to be used in subsequent reconstruction and execution evaluations. Second, Quantum Circuit Definition Data, which is a definition file or script describing the circuit structure, gate information, parameter sets, etc., in a machine-readable format, may be included. Third, visualization information (Optional) such as the circuit block diagram, gate arrangement sequence, simulation-based initial states, or predicted measurement results may be included. The quantum circuit designed in this way can be output in a structured format so that it can be utilized in subsequent stages, namely the quantum circuit reconstruction module (115) and the quantum circuit time complexity measurement module (120). The QPU competency management module (100) mainly functions to collect specification data of various QPUs and manage them in a QPU specification database. The collected specification data consists of factors necessary for QPU performance evaluation, such as gate sets, coherence times (T1, T2), error rates, operation speeds, and topologies, and this data is utilized for computation and recommendation in subsequent modules. For example, it can serve the role of collecting the basis gate sets, gate operation speeds, error rates, coherence times, and the number of concurrently executable qubits for individual QPUs. Since each QPU has different hardware characteristics, it is necessary to standardize and database them to maintain compatibility so that quantum circuits written by users can be executed on various QPUs. The QPU competency management module (100) performs the function of evaluating and managing the computational capability, error rates, coherence times (T1, T2), and supported basis gates of QPUs. Hereinafter, an embodiment of the QPU competency management module (100) will be described in more detail. The QPU competency management module (100) mainly functions to collect hardware and execution performance information for various types of QPUs, systematically organize it, and store and manage it in the form of a QPU competency database. This database can be utilized as a core reference standard in subsequent modules such as quantum circuit transformation, execution time prediction, and QPU resource selection. The QPU performance information collected by the QPU competency management module (100) may include the following items: First, the QPU competency management module (100) can collect the basis gate set indicating the types of quantum gates directly executable on each QPU. Examples include various gates like 'U3', 'CX', 'CZ', 'RX', 'RY', 'RZ', or 'MS Gate'. Next, the QPU competency management module (100) can collect the Gate Operation Time, which is the average time required for each basis gate to execute. This information is generally measured in nanoseconds (ns) or microseconds (µs) and acts as an important factor in calculating the circuit execution time. Additionally, the QPU competency management module (100) collects Coherence Time, indicating the duration a qubit can stably retain quantum information. Here, 'T1' refers to energy relaxation time, and 'T2' refers to phase dephasing time, and these values profoundly impact executable circuit time and reliability. The QPU competency management module (100) additionally collects gate error rates, representing the average probability of errors occurring when each basis gate is executed. This value can be utilized to evaluate the overall circuit execution accuracy and result reliability. Furthermore, the QPU competency management module (100) can also collect and store the Readout Error Rate, the probability that a qubit is observed in a state different from its actual state when measured. Regarding the internal QPU structure, the QPU competency management module (100) can collect the Qubit Topology indicating inter-qubit connections. This information shows which qubits are directly connected to each other and can serve as an important criterion for determining whether to insert SWAP gates and selecting circuit optimization strategies when necessary. Moreover, the QPU competency management module (100) can also collect and record the total number of qubits provided by each QPU, the number of qubits capable of simultaneous operations, and whether parallel execution of multiple circuits is supported. This information is useful for allocating appropriate resources during circuit execution. QPU manufacturers disclose their hardware performance and characteristics externally, and this information is provided in various ways. Generally, QPU manufacturers provide technical documentation containing QPU specifications, performance metrics, supported gate sets, coherence times (T1, T2), error rates, and basis gate lists via their official websites. Furthermore, through developer portals or API documentation, they guide users on QPU programming methods, Software Development Kits (SDKs), and simulator usage, supporting developers to understand QPU characteristics and develop or test applications even without physical hardware. The QPU competency management module (100) can collect official data such as technical documents and API docs provided by QPU manufacturers through these channels. Additionally, it can utilize feedback data provided in real-time from cloud-based quantum computing platforms like IBM Quantum and Amazon Braket.

Furthermore, a method of securing performance data through experimental statistical analysis based on measurement results obtained by executing direct experiments can also be implemented in parallel. The competency database constructed by the QPU competency management module (100) can be utilized as base data for operations in the quantum circuit reconstruction module (115) and the quantum circuit time complexity measurement module (120). According to one embodiment, the QPU competency management module (100) shown in FIG. 1 can be configured to operate independently from the quantum circuit reconstruction module (115) and the quantum circuit time complexity measurement module (120). On the other hand, in another embodiment, at least a portion of the functions of the QPU competency management module (100) may be implemented by being integrated into either the quantum circuit reconstruction module (115) or the quantum circuit time complexity measurement module (120), or both. The QPU competency management module (100) can be executed on a classical computer. In one embodiment, the function of collecting real-time performance data of QPUs may be executed with the assistance of a cloud server or dedicated hardware. The quantum circuit reconstruction module (115) can transform the quantum circuit output by the quantum circuit design module (110) into a circuit composed of basis gates supported by each QPU. In the present invention, the quantum circuit reconstruction module (115) is a sub-module for converting the logical quantum circuit output by the quantum circuit design module (110) into an executable format on actual QPUs, restructuring the circuit to fit the basis gate set of each QPU. The applied embodiments can be distinguished as follows: The first embodiment assumes an environment where various QPUs all follow the same standard gate set. For example, assuming all QPUs only support gates like 'U3' and 'CX' (or 'CNOT'), the user-designed quantum circuit can be transformed into a single fixed reconstructed format. In this case, there are the following characteristics: First, a unified gate decomposition rule set can be defined. Second, since all QPUs can use the same configured reconstructed circuit, the reconstructed circuit exists as only one version. Third, QPU selection can be made by comparing QPU-specific execution times, wait times, costs, etc., for this single common circuit. That is, in this embodiment, the flow dictates converting 1 quantum circuit into 1 reconstructed quantum circuit, and then evaluating multiple QPUs based on this 1 reconstructed quantum circuit. The second embodiment assumes a realistic environment where at least two of the multiple QPUs provide different gate sets. For example, QPU A supports 'U3' and 'CX' gates, QPU B provides 'RZ', 'RX', 'RY', and 'CZ' as basis gates, and QPU C uses an ion-trap architecture based on 'MS Gate' (Mølmer-Sørensen). In this case, even for the same logical quantum circuit, the circuit must be reconstructed in different ways according to the basis gates of each QPU. In this case, there are the following characteristics: First, for a single logical circuit, different reconstructed circuits may be generated for each QPU. Second, each reconstructed circuit can be optimized considering QPU-specific characteristics and physical constraints (e.g., topology, parallel support, etc.). Third, consequently, QPU performance comparison is performed based on QPU-customized reconstructed circuits, rather than a single circuit. That is, in the second embodiment, the flow follows: 1 quantum circuit → N QPU-specific reconstructed circuits → comparison of QPU-specific execution times. The quantum circuit time complexity measurement module (120) can analyze the quantum circuit designed by the quantum circuit design module (110). The quantum circuit time complexity measurement module (120) can estimate the computational cost required to execute the circuit by evaluating the execution time, depth, and number of gates used in the given quantum circuit. The quantum circuit time complexity measurement module (120) can be executed on, for example, a general classical computer. Hereinafter, the quantum circuit time complexity measurement module (120) will be described in more detail. The quantum circuit time complexity measurement module (120) performs the role of evaluating the expected total execution time when the QPU-specific reconstructed quantum circuits received from the quantum circuit reconstruction module (115) are actually executed on specific QPUs. Here, the reconstructed quantum circuit refers to a circuit transformed from the user-designed logical quantum circuit to fit a specific QPU's basis gate set. If the types of basis gates and operation methods supported differ across QPUs, different reconstructed circuits may exist for each QPU. The quantum circuit time complexity measurement module (120) calculates the total execution time by querying the individual gate execution times required to execute each basis gate comprising these reconstructed circuits on the corresponding QPU, and then accumulating or consolidating them. The total execution time is calculated in a more realistic and precise manner by considering the circuit's parallelism, rather than simply summing the execution times of all gates sequentially. This approach is possible because a quantum circuit has a structure that can perform gate operations simultaneously on multiple qubits. For example, operations applied to mutually independent qubits among the gates belonging to a single layer can be executed in parallel, so the execution time of that layer is evaluated as the operation time of the longest gate among them. Thus, the total execution time of the entire circuit can be calculated by summing these maximum operation times per layer. Additionally, this module can reference the coherence time (T1 / T2) of the QPU during the execution time calculation process to verify whether the circuit can execute stably within the QPU's physical capability range. If necessary, evaluations predicting the execution failure probability or success rate for that circuit can also be run in parallel. Alongside this, information such as gate error rates and topology constraints (e.g., qubit connection limits) stored per QPU can be selectively incorporated, allowing the total execution time assessment to expand beyond simple time prediction into reliability-based executability analysis. Consequently, the quantum circuit time complexity measurement module (120) outputs the expected total execution time and success probability when the circuit is executed on the corresponding QPU, comprehensively considering the structural complexity of the reconstructed circuit, gate-specific operation times, circuit parallelism, and QPU physical characteristics. Fundamentally, the quantum circuit time complexity measurement module (120) can evaluate and output the total execution time required for execution on the corresponding QPU for each QPU-specific reconstructed circuit. The physical quantum computer resource recommendation module (130) performs the function of allocating the quantum circuit to be executed to the most appropriate QPU based on the data evaluated in the QPU competency management module (100). The physical quantum computer resource recommendation module (130) can determine the optimal environment for the execution task of each quantum circuit by comprehensively considering QPU availability, execution cost, error rates, hardware topology, etc. The physical quantum computer resource recommendation module (130) can be executed on a classical computer or a cloud-based resource management system (e.g., AWS, IBM Quantum Cloud). Hereinafter, the physical quantum computer resource recommendation module (130) will be described in more detail. The physical quantum computer resource recommendation module (130) performs the function of selecting the optimal QPU by comprehensively considering various evaluation factors, rather than a single criterion, in the QPU selection process for executing a quantum circuit. This module uses the QPU-specific circuit execution times received from the quantum circuit time complexity measurement module (120) as primary input values while concurrently analyzing various metrics related to the hardware, economic, and operational characteristics of each QPU to calculate a composite score for QPU selection. More specifically, the physical quantum computer resource recommendation module (130) can synthetically consider the following items: First, the physical quantum computer resource recommendation module (130) considers the total execution time required to execute the respective reconstructed circuit on each QPU. This value is calculated by the quantum circuit time complexity measurement module (120) and is a result comprehensively reflecting the QPU's operation speed, basis gate configuration, and circuit parallelism. Second, this module includes the gate error rate of each QPU as an evaluation factor. The gate error rate implies the average probability of errors occurring in each basis gate executed by the QPU. The higher the error rate, the lower the accuracy of the QPU, resulting in a relatively unfavorable evaluation. Third, the coherence time of each QPU is also a crucial factor to consider. Coherence time is the time during which a qubit can stably retain quantum information. If the circuit execution time exceeds the coherence time, the reliability of the results may drop; thus, this condition can act as a penalty during the selection process. Fourth, the task wait time of each QPU is also reflected in the evaluation. The task wait time is predicted based on tasks currently executing or queued on that QPU. When rapid processing speed is demanded, a QPU with a shorter wait time is preferentially selected. Fifth, the usage cost of each QPU is considered. Usage cost includes execution unit prices, API call fees, or hourly usage rates billed by cloud-based quantum computing platforms. In environments where cost-efficiency is important, a low-cost QPU may receive a higher evaluation. Sixth, user preference settings or service provider policies can also influence QPU selection. For example, if a specific project is configured to always use a specific QPU, or if there is a QPU prioritized for tasks demanding high reliability, such settings can be reflected in the final QPU score calculation. These various factors can be integrated using a weight-based approach to be quantified into a QPU composite evaluation score. For instance, if a user prioritizes speed, higher weights can be assigned to execution time and wait time, whereas if accuracy is prioritized, greater weight can be allocated to error rates and coherence time factors.

Ultimately, the physical quantum computer resource recommendation module (130) selects the QPU with the highest calculated score and registers the circuit execution task into that QPU's task queue. If necessary, this selection process can be configured to re-evaluate in real-time or to flexibly process migrations to another QPU in the event of a failure. The physical quantum computer resource recommendation module (130) can support various scoring methods to select a QPU based on different evaluation criteria. In one embodiment of the present invention, three representative scoring methods can be considered as follows: First, "Minimum Time Scoring" is based on the total time taken to execute a specific circuit (= sum of execution times of each basis gate × total number of gates), prioritizing the QPU that provides the shortest execution time. This method favors QPUs that can complete circuit execution quickly by accounting for parallel execution structures and circuit depth. Second, "Minimum Cost Scoring" considers the usage cost of the QPU. Generally, QPUs with shorter coherence times (e.g., superconductor-based) have relatively lower cooling or maintenance costs, making them economical and cheaper per execution. Thus, it is possible to select a QPU with high cost-efficiency while ensuring executability and accuracy. Third, "Minimum Error Scoring" evaluates the relationship between QPU coherence time and circuit execution time, establishing the stability of quantum states during circuit execution as the primary criterion. If the coherence time is longer than the circuit execution time, stability is high; conversely, as they get closer, the probability of errors increases, allowing a penalty to be assigned. These scoring models are not just evaluated in simple parallel but can have priorities or be organically linked through specific components. For example, "Minimum Time Scoring" can be the baseline metric, and underneath it, cost or error probability can be adjusted based on weights. Furthermore, to support the validity of the "Minimum Cost Scoring" method, which considers the QPU cost structure, the present invention explains technical factors regarding the cost differences between representative qubit implementations: superconducting and ion trap methods.

Superconducting-based QPUs must operate at extremely low temperatures (about 10~20 millikelvin), requiring expensive dilution refrigerators. Such equipment can cost hundreds of thousands of dollars, demanding continuous cooling maintenance and complex upkeep systems. Also, superconducting qubits require high-precision nanofabrication techniques, necessitating precise manufacturing processes and special materials. Conversely, ion trap-based QPUs can operate at relatively higher temperatures (about 4K), and because they are primarily implemented using laser and optical systems, cooling costs are lower and maintenance is more straightforward. Additionally, the ion trap method allows for relatively easy modular expansion, resulting in lower initial deployment costs. For these reasons, ion trap methods generally have lower hardware costs compared to superconducting methods. Therefore, QPU coherence time, implementation method, cooling, and maintenance costs are factors directly linked to costs. The resource recommendation method of the present invention can quantitatively reflect these differences, allowing QPUs with relatively lower execution costs to gain priority in Minimum Cost Scoring. Furthermore, the present invention may include an additional component called the iteration count adjustment unit (135) in the QPU selection evaluation and execution strategy. This adjustment unit (135) provides a function that calibrates overall execution accuracy and performance by adjusting the number of times a circuit is iteratively executed on a specific QPU. Hereinafter, the iteration count adjustment unit (135) provided according to an embodiment of the present invention will be described with reference to FIG. 1. The iteration count adjustment unit (135) can perform the function of adjusting the number of times identical circuits must be iteratively executed on each QPU to optimize the execution accuracy of the quantum circuit and the execution strategy of the entire system. Considering the inherent uncertainty of quantum operations, error rates, and coherence times, the iteration count can act as a crucial variable determining overall execution quality. The iteration count adjustment unit (135) can interoperate with the QPU competency management module (100) and the physical quantum computer resource recommendation module (130) and adjust iteration counts in the following ways: First, iteration counts can be adjusted based on a look-up table mapping basic gate-specific operation time information supported by each QPU against expected iteration counts. This table may contain execution time estimates or historical measurement data predefined by QPU providers or operators, and feedback information users received from previous operations can also be utilized. For example, based on the actual time taken from when a user requests an operation on a specific QPU until receiving a response, the iteration count can be adjusted. Alternatively, a pre-configured iteration execution time can be tabulated based on the number of basis gates in each QPU. Second, iteration counts can be adjusted according to a mapping table reflecting the relationship between the coherence time (T1, T2) of each QPU and iteration execution stability. For QPUs with short coherence times, reducing the circuit's iteration count or distributing operations via parallelization may be preferred; conversely, QPUs with long coherence times allow for more iterative operations, securing highly reliable results. This adjustment of iteration counts is not merely designated by the user but can be performed automatically in conjunction with scoring models. For instance, even if a specific QPU is deemed most suitable under Minimum Time Scoring in the resource recommendation module (130), if its coherence time or error rate is low, adjusting the iteration count can maintain overall performance balance. The iteration count adjustment unit (135) may operate based on fixed rules or be implemented as an adaptive adjustment unit that dynamically updates by reflecting external feedback (e.g., measurement results, user feedback). In one embodiment, it can operate alongside a cloud-based system or QPU integration modules, and may be independently implemented within a scoring engine or a separate execution thread. In FIG. 1, the iteration count adjustment unit (135) can be arranged as an independent functional module informatically linked with the QPU competency management module (100), the quantum circuit time complexity measurement module (120), and the physical quantum computer resource recommendation module (130). By precisely adjusting the number of execution iterations according to the performance characteristics of each QPU and circuit traits, the execution efficiency and reliability of the entire system can be improved. The introduction of the iteration count adjustment unit (135) in the present invention is clearly necessary because executing multiple iterations is often inevitable due to the execution characteristics of quantum algorithms and the physical limits of quantum operations. First, because quantum algorithms inherently possess probabilistic properties, accurate conclusions can only be drawn by iteratively executing the identical circuit multiple times to collect a distribution of results. For instance, Grover's algorithm requires about √N iterations when searching for one out of N items. Second, multiple iterative operations are also essential during the process of combining highly failure-prone physical qubits to implement stable logical qubits. This is clearly seen in Quantum Error Correction (QEC) techniques, where repeated measurements and corrections are accompanied for error detection and correction. Third, iterative operations serve not only to secure simple statistical stability but also as a means to enhance execution reliability by mitigating the impacts of coherence times (T1, T2) and error rates. Therefore, adjusting the iteration count based on circuit or QPU characteristics is a core execution strategy element in quantum computing, which the present invention realizes through the functional implementation of the iteration count adjustment unit (135). The task management module (140) performs the role of registering and managing quantum circuit execution tasks in the task queue (150) corresponding to the respective QPU so that the quantum circuit can be executed on the QPU selected by the physical quantum computer resource recommendation module (130). The task management module (140) can be implemented in a cloud-based task management system or a High-Performance Computing (HPC) cluster environment. The task management module (140) effectively stores pending tasks using task queues (150) assigned to each QPU, and when the corresponding QPU is in an executable state, it forwards prepared tasks to initiate execution. In FIG. 1, three task queues (150) are illustrated, with each queue individually holding tasks and transmitting them to the connected QPU (160) once an executable state is reached. According to an embodiment, data input to the task queue (150) may include Quantum Circuit Definition data, Execution Metadata, QPU execution requirements, priority information, etc. This data can collectively be referred to as a Quantum Circuit Execution Request. Based on the input information, the task queue (150) can select and execute appropriate tasks at the point when the target QPU is ready. At this time, the quantum circuit data may include the logical definition of the target circuit and instruction sets expressed in quantum assembly languages like OpenQASM, Quil, Cirq, etc. Execution metadata may contain information such as the number of required qubits, estimated execution time, gate count, and circuit depth. QPU execution requirements may include whether the circuit can only be executed on a specific QPU, whether specific gates or gate transformations are needed, and hardware constraints like coherence time (T1, T2). Priority information may include task urgency, user authorization level, or project priority. As shown in FIG. 1, each QPU (160) receives tasks assigned from its corresponding task queue (150), executes actual quantum operations, and returns the execution results in the form of measurement values. The task queue (150) functions to store these execution tasks in a queue manner and allocate them according to execution order. The specific execution method could be a First-In, First-Out (FIFO) method executing tasks as they arrive, or it could operate via a Priority Queue method based on task priority/QPU characteristics, or a QPU-optimized distribution method. The multiple QPUs (160) shown in FIG. 1 may all be different types of QPUs, but at least some may be of the same type. The system architecture presented in FIG. 1 can be effective in optimizing execution speed and utilizing resources efficiently in actual quantum computing systems. Hereinafter, embodiments of the quantum circuit design module (110) presented in FIG. 1 will be described in greater detail. The Quantum Circuit Definition Data input into the quantum circuit design module (110) may include all input information provided by the user, such as circuit definitions, qubit states, gate configurations, parameter values, qubit counts, gate types, circuit connection methods, parameter values, and script code. The quantum circuit definition data may include the information necessary to design and execute a quantum circuit and specifications of provided input values so the quantum circuit design tool can interpret and process them. The quantum circuit data output by the quantum circuit design module (110) may include result data obtained after executing the quantum circuit, such as simulation results, measured states, probability distributions, execution logs, error analysis results, and visualized graphs. The quantum circuit design module (110) can be a type of computer software executed on a classical computer, serving to design and simulate circuits executable on quantum computers and supporting execution on actual QPUs. For instance, Qiskit, Google Cirq, Rigetti PyQuil, Microsoft Q#, etc., running in JupyterLab, are all software executed on classical computers, through which users can design, simulate, and analyze quantum algorithms. Also, GUI-based tools like IBM Quantum Composer are executed on classical computers, aiding users in designing quantum circuits intuitively. The software of the quantum circuit design module (110) does not control actual QPUs directly but generates QASM (Quantum Assembly Language) code or machine instructions executable on the QPU. Subsequently, these instructions can be transmitted to a QPU via the cloud or simulated on a local emulator. <JupyterLab> The aforementioned JupyterLab is an interactive development environment used across various fields such as data science, machine learning, and quantum computing. It is an extended version of Jupyter Notebook, designed to perform tasks like opening multiple notebooks simultaneously, executing code, visualizing data, and writing documents more efficiently. In the quantum computing field specifically, it supports various quantum programming frameworks like IBM Qiskit, Google Cirq, and Microsoft Q#, making it highly useful for researchers and developers designing and simulating quantum algorithms. JupyterLab allows users to execute code, analyze experimental results, and design quantum circuits in a web-based environment using Python and other programming languages. Also, quantum computing libraries can be easily installed and utilized, providing an optimized environment for researchers of various levels, from beginners to experts, to experiment with quantum algorithms. The input information of JupyterLab can consist of Python code, quantum circuit definitions, parameter values, data files, etc. Users can utilize Python-based quantum computing libraries to define quantum circuits, perform simulations, and analyze results. The output information includes circuit simulation results, probability distributions, measurement outcomes, visualized data graphs, etc. <Quantum Composer> The aforementioned Quantum Composer is a GUI-based quantum circuit design tool provided in IBM Quantum Experience. It allows users to design quantum circuits by placing quantum gates using a drag-and-drop method without directly writing code. Through this, even beginners can easily understand and experiment with quantum circuit concepts, and complex quantum circuits can be visually constructed. Quantum Composer allows users to design and simulate quantum algorithms and connects the designed circuits so they can be executed on actual IBM QPUs. This not only makes it easy to learn quantum computing concepts but also enables the analysis of results executed using actual quantum processors. The input information of Quantum Composer includes quantum gates and qubit states placed by the user via the GUI, and the output information is the execution result of the simulated circuit or the result executed on the actual QPU. These results are provided as probabilistic state vectors or measured outcome values, which the user can analyze to evaluate quantum algorithm performance. <QASM Conversion> Quantum circuits written in environments like JupyterLab or Quantum Composer can be converted into a low-level language called QASM (Quantum Assembly Language). QASM is a language expressing quantum gates in a form that machines can understand and is an essential conversion process before execution on an actual QPU. For example, a quantum circuit designed using Python code in JupyterLab can be converted to the OpenQASM format using the 'qiskit.qasm()' function, enabling execution on IBM Quantum Experience or other QPUs. Even in Quantum Composer, a quantum circuit constructed by a user via GUI can be converted into QASM code. This conversion process converts quantum gates into text-based QASM instructions, ensuring executability on hardware. For instance, a circuit applying a Hadamard gate (H) can be expressed in QASM code as 'h q[0];', and based on this, the corresponding operation is performed on an actual QPU. QASM conversion technology is an important process for standardizing quantum circuits to run on hardware, thereby ensuring consistent execution results across various platforms. Additionally, using QASM allows optimizing quantum circuits to fit specific hardware and enables fine-grained control over quantum gate behaviors. <QPU Competency Management Module> Hereinafter, the QPU competency management module provided according to an embodiment of the present invention will be described in detail with reference to FIG. 2. FIG. 2 illustrates the configuration of the QPU competency management module provided according to an embodiment of the present invention. The QPU competency management module (100) can evaluate the characteristics (operation time, error rate, coherence time, supported basis gates, etc.) of each QPU. The QPU competency management module (100) may include a Basis Gate Operation Time Management Unit (101) managing basis gate operation times for each QPU, and an Execution Mode and Resource State Management Unit (102) for each QPU managing execution modes and resource states. To manage basis gate operation times, it defines the basis gates supported by a specific QPU, manages operation times and error rates for these, and can manage gate decomposition rules. A basis gate is the fundamental operational unit natively provided by each physical quantum processor.

For example, superconducting qubit-based QPUs and ion trap-based QPUs may have different basis gate sets. Generally, gates like X, Y, Z, H, S, T, CNOT, CZ are used, but some QPUs may prefer iSWAP or CZ over CNOT. Additionally, some QPUs might not directly support 2-qubit gates, requiring them to be implemented by combining multiple single-qubit rotation gates. Therefore, the basis gate sets and topologies for each QPU must be managed collectively. The operation time required when each basis gate is actually executed on hardware can range from tens of nanoseconds (ns) to hundreds of nanoseconds, requiring continuous monitoring of this data. Also, to ensure QPU stability and reliability, error probabilities of each gate (e.g., 0.1~1%) can be stored together to estimate the expected error rate of the circuit and apply compensating algorithms. Additionally, information like coherence time (T1, T2) and readout error rates is also managed and can be utilized for subsequent circuit optimization and recommending appropriate resources during execution. For evaluating QPU-specific execution modes and resource states, it can evaluate parallel execution support, hardware coherence time (T1, T2), and scheduling weights. Depending on QPU hardware characteristics, parallel execution capabilities and resource utilization methods can vary. Some QPUs have internal limitations on parallel execution, or due to qubit crosstalk issues, may only be able to execute one quantum circuit at a time. Therefore, the QPU competency management module (100) can preemptively identify and manage such hardware traits, parallel execution capabilities, and qubit mapping constraints. Through this, data can be prepared to select the most suitable QPU and provide an optimal execution environment when executing a specific quantum circuit. The coherence time (T1, T2) of each QPU dictates the duration quantum information can be maintained and directly impacts computation accuracy. In superconducting qubit-based QPUs, T1 and T2 values generally range from several to tens of microseconds (µs), whereas ion trap-based QPUs can maintain relatively longer coherence times. If a long circuit (a circuit with large depth) is executed on a QPU with short coherence time, errors can increase sharply as time elapses. Therefore, by adjusting Scheduling Weights according to circuit depth (gate count) or execution time, QPUs with short coherence times can be set to execute simpler algorithms and avoid complex operations. Through this, unnecessary computational overhead during circuit execution can be reduced, and hardware resources can be optimally allocated. <Quantum Circuit Time Complexity Measurement Module> Hereinafter, the quantum circuit time complexity measurement module provided according to an embodiment of the present invention will be described with reference to FIG. 3. FIG. 3 shows the configuration of the quantum circuit time complexity measurement module provided according to an embodiment of the present invention. To obtain optimal performance from a QPU, it is necessary to evaluate the execution speed and computational cost of the quantum circuit. The quantum circuit time complexity measurement module (120) can analyze the structure of the reconstructed quantum circuit, predict execution time, and evaluate optimization possibilities. Through this, it can verify whether the user-designed circuit is executable and provide information necessary to optimize performance. The quantum circuit time complexity measurement module (120) evaluates and outputs the execution time and complexity of the reconstructed quantum circuit, and this output data can be utilized as a crucial factor in the QPU selection process. The quantum circuit time complexity measurement module (120) may include a Circuit Parsing & QASM Conversion Unit (121) and a Gate Decomposition & Operation Time Aggregation Unit (122). The quantum circuit time complexity measurement module (120) can selectively consider error rates and decoherence. The Circuit Parsing & QASM Conversion Unit (121) can parse user-submitted code and analyze circuit or gate structures for circuit parsing and QASM conversion. Before a quantum circuit can execute, the user-submitted code must be parsed and converted into a standardized Quantum Assembly Language (QASM). Users typically define quantum gates directly in environments like JupyterLab, Quantum Composer, Qiskit, Cirq, PennyLane. However, since the code expression methods may differ across these environments, it is necessary to internally convert them into a standard format like OpenQASM. Going through this conversion process allows quantum circuits written in various development environments to be processed with a unified interface. Additionally, the subsequent process of applying gate decomposition and optimization logic is simplified, and conversion for execution on specific QPUs becomes easier. On the converted QASM code, a step analyzing the overall circuit structure can be performed. This process can analyze total qubit count, gate count and sequence, and Measurement Placement. By analyzing the total qubit count, the resource requirements of the executing QPU can be evaluated by identifying the number of qubits used in the circuit. By analyzing the gate count and sequence, the circuit's complexity can be calculated by looking at the number of operations and execution order. By analyzing measurement placement, one can determine where in the circuit measurements occur, deciding the execution method and result collection approach. Furthermore, if subroutine (subcircuit) calling structures exist (macros, subcircuits), they can be flattened into a single sequence or subjected to specific optimization techniques (Looping, Unrolling). The Gate Decomposition & Operation Time Aggregation Unit (122) can execute basis gate transformation and operation time calculations. Because a QPU can only directly execute a specific set of basis gates, a process of transforming (Decomposition) the logical gates written by the user into basis gates supported by the QPU is required. For instance, SWAP gates are often not directly supported by QPUs and are usually decomposed into 3 CNOT gates. Also, a Toffoli gate (CCNOT) can be decomposed into a combination of 2 CNOT gates + single-qubit gates (like H). During this transformation process, gate duplication handling and optimization techniques can be applied. For example, if identical sequential gates are used repeatedly, they can be merged to reduce gate count or optimize execution time. After transformation is complete, a process to calculate the total operation time by aggregating the execution times of each gate can be performed. Based on the data managed by the QPU competency management module (100) (gate-specific operation time info), the quantum circuit time complexity measurement module (120) sums the execution times of each gate to predict the total circuit execution time and output the predicted value. Because multi-qubit (2-qubit or more) gates have relatively longer operation times and higher error probabilities than single-qubit gates, the number and ratio of multi-qubit gates can be analyzed in detail. At this time, rather than a simple addition, a calculation method considering circuit parallelism can be applied.

Independent gates existing on the same layer can be executed simultaneously; therefore, the total execution time can be calculated by summing the execution time of the longest gate per layer. For instance, if the longest gate execution time in Layer 1 is 200ns, and in Layer 2 is 150ns, the total execution time is not a simple sum (350ns) but the sum of maximum execution times per layer (200ns + 150ns = 350ns). Generally, QPU execution time can be calculated via simple operation time aggregation, but for more sophisticated analysis, error rates and decoherence effects also need consideration. Quantum gates inherently contain errors due to hardware characteristics, and these errors can accumulate while the circuit executes. When specific quantum gates execute, they impact the QPU's coherence time (T1, T2), and executing complex circuits on hardware with short coherence times can cause errors to increase exponentially.

Therefore, some implementations may apply models that accumulate execution errors to predict the final probability of successful execution, in addition to simply measuring operation times. Also, if the QPU performance module can apply Quantum Error Mitigation (QEM) techniques, the effective time complexity reflecting actual execution time and final error rates can be calculated by applying mitigation techniques like Gate Folding and Error Filtering. In summary, the process of measuring the time complexity of a quantum circuit can include parsing the user-written quantum circuit (QASM conversion), transforming it to basis gates, and aggregating execution time in an optimized manner. Additionally, beyond simple operation time analysis, execution time and performance can be evaluated by considering factors like gate parallelism, error rates, and decoherence. Through this, circuits can be optimized into forms with the shortest execution times and lowest error rates, and by allocating suitable circuits to each QPU, execution performance can be maximized. <Physical Quantum Computer Resource Recommendation Module> Hereinafter, the physical quantum computer resource recommendation module provided according to an embodiment of the present invention will be described with reference to FIG. 4. FIG. 4 illustrates the configuration of the physical quantum computer resource recommendation module provided according to an embodiment of the present invention. In a quantum computing environment, the process of allocating quantum circuits to be executed to appropriate physical quantum computers (QPUs) is critical. Because QPUs vary in coherence times, operation speeds, queue states, cost structures, priority policies, etc., a process of recommending the most suitable QPU to execute a given quantum circuit is necessary. This process contributes to optimizing overall execution speed, increasing execution accuracy, and efficiently distributing resources. The physical quantum computer resource recommendation module (130) may include a QPU-specific Coherence Time and Queue State Comparison Unit (131) and a Final Resource Selection and Queue Registration Unit (132). The QPU-specific Coherence Time and Queue State Comparison Unit (131) verifies coherence times, analyzes currently executing tasks and task queues, and can utilize priority and cost models. When executing a quantum circuit, the QPU's coherence time is one of the most critical factors. Coherence time is the duration a quantum state is maintained; if the circuit's execution time is significantly longer than the QPU's average coherence time, the accuracy of the result can drop severely. Thus, executing complex quantum circuits on a QPU with short coherence times is undesirable, and QPU recommendations must reflect this factor. For this, a 'penalty' can be assigned to QPUs with short coherence times so that hardware with longer coherence times is recommended preferentially, even if operation times are identical. Furthermore, the current QPU task processing state (task queue) is also a crucial factor. If a specific QPU is already calculating other tasks, its selection can be evaluated by calculating the remaining operation time and the estimated operation time of pending tasks registered in its queue. For example, the optimal execution environment can be analyzed using metrics like Earliest Completion Time (the QPU likely to finish fastest) or Average Wait Time. If a specific QPU is overloaded, selecting another QPU considering execution speeds might be advantageous to reduce overall processing time. When selecting a QPU, not only coherence times and queue states are considered, but priority and cost structures can also be reflected. For example, some tasks may have urgent priority, or specific QPUs might be preferentially allocated based on specific users or research projects. Additionally, since QPU usage costs may differ, low-cost QPUs can be preferentially recommended if budgets are restricted. For example, suppose QPU A has low error rates and is fast but has high usage costs and a short queue, whereas QPU B is relatively cheaper but has a long queue and slightly higher error rates. In this case, the recommended QPU can vary according to the user's objective. If accuracy is paramount, QPU A might be recommended despite higher costs, whereas if the budget is important, QPU B might be chosen. To reflect these factors, an optimal QPU can be selected by applying scoring methods based on the characteristics of each QPU. The Final Resource Selection and Queue Registration Unit (132) can perform time complexity and wait time calculations, resource allocation and queue registration, and execution and monitoring tasks. To select the appropriate QPU, predictive models considering time complexity and wait times must be used. An Expected Completion Time (ECT) can be calculated per QPU by adding "Actual operation time needed for circuit execution + Current Queue wait time". Furthermore, by weighting factors like coherence time, error rate, cost, and priority, the QPU receiving the highest final score can be selected. Once a QPU is selected, the quantum circuit execution request can be registered into the task queue of that QPU, and a process to determine execution order may occur. Here, the QPU with the highest score, or the QPU with the shortest ECT, can be selected first. Then, the circuit execution task is registered into the task queue of the selected QPU and can be scheduled alongside other pending tasks. In some cases, a "Hybrid Model" running some gates in parallel with an emulator may be applied. In this hybrid model, some operations are performed on a classical computer, leaving complex operations for the QPU to handle. This method can help shorten execution times and optimize hardware resources. Tasks registered in the task queue can be sequentially uploaded to the QPU to begin execution. While execution progresses, a process to continuously monitor the QPU's state, such as temperature changes, coherence time fluctuations, and error rate changes, can be performed. Since these state factors can affect QPU performance, if an unexpected problem (e.g., QPU instability, sharp error rate spikes) arises during task execution, policies to dynamically migrate tasks to another QPU can be considered. For example, if a problem occurs where coherence time drops sharply during execution on a specific QPU, execution could be transferred to another alternative QPU, or additional error correction techniques might be applied. <Task Queue> Hereinafter, the task queue (150) shown in FIG. 1 will be described in detail. In one embodiment, data output by the task queue (150) may include instruction sets executable on actual QPUs, QPU-optimized execution plans, and information about the executing QPU. Here, the executable instruction sets on actual QPUs may include circuits transformed to fit specific QPU basis gates and executable quantum assembly codes (OpenQASM, Quil, etc.). The QPU-optimized execution plans may include optimized gate sequences per QPU and internal QPU qubit mapping information. The information about the executing QPU may include data on which QPU execution will occur and execution schedule info if parallel execution is supported. These output data can collectively be referred to as a Quantum Circuit Execution Command delivered to the QPU for execution. The physical devices where the task queue (150) performs I/O are not limited to one specific device; they can operate across various environments like cloud-based quantum computing platforms (AWS Braket, IBM Quantum Experience, etc.), HPC systems, local servers or proprietary data-center infrastructure, distributed systems operating multiple QPUs, and edge computing environments. The task queue (150) can be implemented using software-based systems such as: First, cloud-based task management systems like Amazon SQS (Simple Queue Service), Google Cloud Tasks, IBM Quantum Cloud job reservation systems. Second, distributed queue systems like RabbitMQ, Apache Kafka, Celery. Third, OS task schedulers acting as process schedulers managing tasks executing on specific QPUs. However, the implementation entity of the task queue (150) is not restricted to these examples. In one embodiment, the operation of the task queue (150) may include the following behaviors. Namely, the task queue (150) can determine whether the user-requested quantum circuit is executable. Furthermore, the task queue (150) can execute immediately if the execution target QPU is available. Also, the task queue (150) can save the task in the task queue if the execution target QPU is unavailable or resources are insufficient. Once the executing QPU becomes ready, the task queue (150) can pull the task from the queue and allocate execution. FIG. 1 illustrates a scenario where multiple task queues (150) are prepared. However, the system's operational method may change depending on the number of task queues (150) utilized. For instance, if only one task queue (150) exists, all tasks are managed in a single queue, and if there are multiple QPUs, tasks can be distributed centrally. In contrast, if multiple task queues (150) exist, tasks can be classified and managed based on specific criteria (e.g., per QPU, per task type). The task queue (150) can have dynamic sizing and possesses ordering for adding/removing elements (FIFO or Priority Queue, etc.). That is, the task queue (150) stores tasks with a specific ordering concept and can process tasks in the order received or according to priority. Each element of the task queue (150) is a Task. That is, multiple tasks exist in a single task queue (150), and each task enters as an element of the queue. A single task in the task queue in the quantum computing system shown in FIG. 1 might be a Quantum Circuit to be executed. At this time, each task can contain operations that must be executed on a specific QPU. The order (sorting method) in which multiple tasks belonging to the task queue (150) are processed may be FIFO, Priority Queue, Round Robin, or Qubit Availability Scheduling methods. Here, Qubit Availability Scheduling is a method that determines tasks to execute based on available qubit resources in the QPU; for example, if a QPU supporting only 50 qubits receives a task requiring 100 qubits, it can decide to execute it on a different QPU. FIG. 5 is a flowchart illustrating an adaptive QPU allocation method for quantum circuit execution provided according to an embodiment of the present invention. The execution flow of the quantum computing system targets efficient QPU (Quantum Processing Unit) resource utilization and optimized circuit execution. This process can include five primary steps: QPU Competency Management, Task Submission, Time Complexity Measurement, Resource Recommendation, and Execution and Monitoring. In step (S110), QPU Competency Management can be executed. Each QPU supports different basis gate sets and possesses varying hardware characteristics such as gate operation speed, error rate, coherence time, number of concurrently executable qubits, etc. By registering and managing this information in the QPU competency management module (100), baseline data is prepared and provided so the most appropriate QPU can be selected when a specific quantum circuit executes. Also, by defining rules to decompose logical gates unsupported by the QPU into basis gates and maintaining algorithms to optimize this, quantum circuits can be compiled in diverse QPU environments. Through this, compatibility issues arising from QPU hardware differences are resolved, enabling optimized execution. In step (S120), a user can draft a quantum circuit, convert it into QASM format, and submit it. Users can draft quantum circuits utilizing quantum circuit design tools like JupyterLab, Quantum Composer, etc. These circuits can be executed in conjunction with Python APIs like Qiskit, Cirq, PennyLane, etc., and before execution, can be converted into QASM (OpenQASM, etc.) format and submitted. As such, user-drafted quantum circuits are converted into a standardized format and processed consistently thereafter. That is, step (S120) may include a process of converting user-defined circuits into a standard interface. In step (S130), the time complexity of the quantum circuit can be measured. The quantum circuit submitted by step (S120) may undergo a process of converting into a reconstructed quantum circuit utilizing only the basis gates managed by QPU competencies. Subsequently, the expected execution time can be measured by aggregating gate operation times based on the transformed gates or by summing the maximum times required per layer, taking circuit parallelism into account. Additionally, at this stage, the success rate and accuracy of the circuit can be analyzed by considering error rates and coherence times. In other words, beyond merely predicting execution time, it can evaluate whether accurate results can be obtained. In step (S140), physical quantum computer resource recommendation can be performed. Once the expected execution time of the quantum circuit is measured, a process recommending the most appropriate QPU based on this can proceed. At this time, executable hardware can be automatically selected by comprehensively evaluating each QPU's current state (executing tasks, queue length, priority settings, etc.), coherence time, execution costs, etc. For example, if the fastest execution is required, a QPU with a short queue and fast processing speed might be preferentially recommended. In contrast, if accuracy is paramount, a QPU with low error rates and long coherence times may be selected. Conversely, if cost is important, a low-cost QPU may be chosen. Thus, depending on user objectives (speed, accuracy, cost reduction, etc.), an optimal QPU is recommended, and the determined execution request can be registered in the task queue. In step (S150), execution and monitoring of the quantum circuit on the QPU can be performed. The quantum circuit can execute on the selected QPU, with execution occurring sequentially or in parallel. Once execution completes, results can be verified via a user dashboard or API, and post-processing like error mitigation and measurement result analysis can be performed if needed. During execution, QPU states (temperature, coherence time, error rate changes, etc.) can be monitored in real-time, and if unexpected errors occur, policies for migrating the task to another QPU may be applied. FIG. 6 is a flowchart illustrating a method for allocating QPU resources for quantum circuit execution provided according to an embodiment of the present invention. In step (S210), a first computing device can generate a quantum circuit based on given quantum circuit definition data. The first computing device might be a device running quantum circuit design tools, such as JupyterLab or Quantum Composer. The first computing device could be, for example, a general classical computer (CPU server) or a user terminal (Laptop, Workstation, Cloud dev environment) enabling users to directly design quantum circuits. In step (S220), a second computing device may calculate a score for each of a plurality of QPUs using a weighted sum of terms selected from a set of terms including an Expected Completion Time (ECT) of each QPU for the generated quantum circuit, the gate error rate of each QPU, and the cost of each QPU. Here, the weight assigned to at least one term in the set of terms may be 0. The second computing device can utilize QPU-specific competency data stored by the QPU competency management module. The second computing device could be, for example, a classical computer (CPU server), a cloud-based computing system, or an HPC server. Here, the set of terms includes a term representing a coherence penalty defined based on the coherence time of the corresponding QPU, and the selected terms may include the coherence penalty term. Here, the expected completion time may include the actual operation time of the corresponding QPU required for executing the generated quantum circuit and the current wait time in the task queue of the corresponding QPU. In step (S230), a third computing device can select the QPU corresponding to the highest score among the plurality of scores calculated respectively for the plurality of QPUs. The third computing device might be, for example, a classical computer (CPU server), a cloud-based computing system, or an HPC server. In step (S240), a fourth computing device can register the generated quantum circuit into the task queue of the selected QPU. The fourth computing device might be, for example, a classical computer (CPU server), a cloud-based computing system, an HPC server, or an edge computing device performing distributed scheduling within a specific QPU network. In step (S250), a fifth computing device can monitor the execution of the generated quantum circuit on the selected QPU. The fifth computing device can collect execution results of the quantum circuit running on the QPU and provide them in log or API format for the user to view. The fifth computing device could be a classical computer (CPU server), a cloud-based computing system, an HPC server, an edge computing device executing distributed scheduling within a specific QPU network, or an internal QPU module directly monitoring from the QPU's own logging system. In step (S260), if an unexpected error or delay is detected during monitoring, a sixth computing device can register the generated quantum circuit to the task queue of a different QPU. The sixth computing device could be a classical computer (CPU server) or a cloud-based failover system. In one embodiment, the method for allocating QPU resources for quantum circuit execution can be performed in a single centralized system (e.g., a single server or a cloud-based computing system). In this case, the first computing device through the sixth computing device may all be executed on the same physical device. For example, a cloud-based quantum execution management server can handle all tasks exclusively. In contrast, in another embodiment employing a distributed computing architecture, each step of the QPU resource allocation method for quantum circuit execution might be performed on different physical devices. For example, the processes of quantum circuit generation, execution score calculation, QPU selection, execution registration, monitoring, and reallocation might be executed on individual cloud servers or network edge devices. Also, when operating quantum computing cloud services, specific roles might be executed in separate data centers or distributed cloud systems. FIG. 7 is a flowchart embodying an embodiment of the step of calculating a score shown in FIG. 6. The step of calculating the score (S220) may include a step of calculating the operation time of the corresponding QPU required for the execution of the generated quantum circuit (S2201). Here, the coherence penalty may be determined based on the relative length of the operation time of the corresponding QPU required for the execution of the generated quantum circuit compared to the average coherence time of the corresponding QPU. Here, the operation time of the corresponding QPU may be the total operation time of the corresponding QPU required for the execution of the entire quantum circuit. Alternatively, the operation time of the corresponding QPU may be a layer operation time of the corresponding QPU required for the execution of any one of the layers constituting the quantum circuit. Here, if the operation time of the corresponding QPU is greater than a predetermined threshold, the coherence penalty may be designed to increase as the operation time of the corresponding QPU increases. FIG. 8 is a flowchart embodying another embodiment of the step of calculating a score shown in FIG. 6. The step of calculating the score (S220) may include transforming the quantum gates constituting the generated quantum circuit into a combination of basis gates supported by the corresponding QPU to reconstruct it into an executable quantum circuit on the corresponding QPU (S2211), and determining the operation time of the corresponding QPU required for executing the generated quantum circuit based on the operational execution time of each of the quantum gates constituting the reconstructed quantum circuit (S2212). According to the present invention, technical effects described below can be achieved. First, resource utilization efficiency can be maximized. In a quantum computing environment, utilizing limited numbers of qubits and hardware resources as efficiently as possible is crucial. Current physical quantum computers have limited qubit counts, and physical constraints exist on executable circuit sizes. According to the present invention, resource bottlenecks can be minimized by evaluating circuit complexity, analyzing the queue state of each QPU, and allocating the optimal hardware. Second, improved accuracy and shortened execution times can be achieved. Considering factors like coherence time, gate error rates, and existing queue loads is essential to increase the accuracy of execution results in quantum computing. According to the present invention, selecting a QPU with long coherence time increases the quantum state retention time, improving accuracy, and utilizing hardware with low gate error rates reduces computational errors. Additionally, by avoiding QPUs with long queues and applying circuit parallelization strategies, execution time can be significantly shortened. Third, flexible research and development environments can be supported. To maximize quantum computing utilization, providing flexible R&D environments is important. To this end, by integrating with diverse IDEs (Integrated Development Environments) like JupyterLab and Quantum Composer, developers can design quantum circuits more easily and are supported in writing circuits conveniently via visual methods rather than just code. Additionally, by designing automatic QASM conversion and QPU mapping, development productivity can be enhanced. The present invention can be utilized efficiently across various user environments, including corporate R&D, academic research, and research institute projects, and can support functions to adjust hardware resources reflecting the priorities, usage volumes, and billing policies of each project. Fourth, scalability can be provided. Current quantum computing environments are evolving rapidly, and interoperability with not only physical QPUs but also emulators (classical quantum simulation environments) is a major consideration. For this, hybrid execution environments can be constructed to utilize HPC, GPU, and TPU-based quantum simulators in parallel. This method can operate by simulating large-scale quantum circuits to verify performance, while concurrently running hardware verifications on actual QPUs. It also provides scalability to easily integrate and manage new types of physical quantum computers added in the future (photonic, spin-qubit based, etc.). Additionally, by registering new QPU info into the QPU competency Database (DB), seamless integration with existing systems is supported even if new hardware emerges. Fifth, systematic QPU management capabilities can be provided. Because different physical QPUs have different operational characteristics in a quantum computing environment, they must be managed in a standardized way to provide optimal execution environments. The present technology manages the basis gate configurations, operation times, error rates, coherence times, etc., of each QPU systematically through the aforementioned QPU competency management, databasing them to manage them in a standardized manner. Sixth, systematic scheduling in multi-user environments can be supported. As practical utilization of quantum computing expands, multiple users and various projects might need to utilize QPU resources concurrently. According to the present invention, optimal resource distribution is possible even if multiple users share the same quantum computing infrastructure via systematic scheduling. Real-time evaluation of each QPU's task queue state ensures balanced task distribution without overloading specific QPUs, and priority settings can be leveraged to adjust so urgent computations are processed swiftly. Seventh, flexible quantum algorithm development through hybrid execution environments can be supported. Since physical QPUs have physical constraints like coherence time limits, high error rates, and limited qubit counts, executing large-scale quantum circuits solely on them is often difficult. To resolve this, the present technology can support a hybrid approach where some operations are executed on emulators (HPC, GPU, TPU-based quantum simulators) and the remainder are processed on physical QPUs. Utilizing the above-described embodiments of the present invention, those skilled in the art will be able to easily make various changes and modifications within the scope that does not depart from the essential characteristics of the present invention. The contents of each claim in the claims section can be combined with other non-cited claims within the scope comprehensible through this specification.

## Claims

1. A method for allocating QPU resources for quantum circuit execution, comprising: generating, by a computing device, a quantum circuit based on given quantum circuit definition data; calculating, by the computing device, a score for each of a plurality of QPUs using at least one term among a set of terms including an Expected Completion Time (ECT) of each QPU for the generated quantum circuit, a gate error rate of each QPU, and a cost of each QPU; selecting, by the computing device, a QPU corresponding to the highest score among the plurality of scores calculated respectively for the plurality of QPUs; and registering, by the computing device, the generated quantum circuit to a task queue of the selected QPU.

2. The method for allocating QPU resources for quantum circuit execution according to claim 1, wherein the at least one term includes the expected completion time of each QPU for the generated quantum circuit.

3. The method for allocating QPU resources for quantum circuit execution according to claim 2, wherein the at least one term includes a term representing a coherence penalty defined based on the coherence time of each QPU.

4. The method for allocating QPU resources for quantum circuit execution according to claim 3, wherein the coherence penalty is determined based on the relative length of the expected completion time of each QPU required for executing the generated quantum circuit compared to the average coherence time of each QPU.

5. The method for allocating QPU resources for quantum circuit execution according to claim 2, wherein the step of calculating the score comprises: transforming quantum gates constituting the generated quantum circuit into a combination of basis gates supported by each QPU to reconstruct it into an executable quantum circuit on each QPU; and determining the expected completion time of each QPU required for executing the generated quantum circuit, based on the operational execution time of each of the basis gates constituting the reconstructed quantum circuit.

6. The method for allocating QPU resources for quantum circuit execution according to claim 3, wherein, when the expected completion time of each QPU is greater than a predetermined threshold, the coherence penalty increases as the expected completion time of each QPU increases.

7. The method for allocating QPU resources for quantum circuit execution according to claim 1, wherein the expected completion time includes a total operation time of each QPU required for executing the generated quantum circuit and a current wait time in the task queue of each QPU.

8. The method for allocating QPU resources for quantum circuit execution according to claim 1, further comprising: after the step of registering the quantum circuit, monitoring, by the computing device, the execution of the generated quantum circuit on the selected QPU; and registering, by the computing device, the generated quantum circuit to the task queue of a different QPU if an unexpected error or delay is detected during monitoring.

9. The method for allocating QPU resources for quantum circuit execution according to claim 1, wherein, in the step of calculating the score, the score for each of the plurality of QPUs is calculated using a weighted sum of terms selected from the set of terms including the Expected Completion Time (ECT) of the corresponding QPU for the generated quantum circuit, the gate error rate of the corresponding QPU, and the cost of the corresponding QPU.

10. A computing device including a memory storing instructions for allocating QPU resources for quantum circuit execution, wherein when the instructions are executed by the computing device, the computing device is configured to: generate a quantum circuit based on given quantum circuit definition data; calculate a score for each of a plurality of QPUs using at least one term among a set of terms including an Expected Completion Time (ECT) of the corresponding QPU for the generated quantum circuit, a gate error rate of the corresponding QPU, and a cost of the corresponding QPU; select a QPU corresponding to the highest score among the plurality of scores calculated respectively for the plurality of QPUs; and register the generated quantum circuit to a task queue of the selected QPU.

11. The computing device according to claim 10, wherein the at least one term includes the expected completion time of each QPU for the generated quantum circuit.

12. The computing device according to claim 11, wherein the at least one term includes a term representing a coherence penalty defined based on the coherence time of the corresponding QPU.

13. The computing device according to claim 12, wherein the coherence penalty is determined based on the relative length of the expected completion time of each QPU required for executing the generated quantum circuit compared to the average coherence time of each QPU.

14. The computing device according to claim 11, wherein the process of calculating the score comprises: a process of transforming quantum gates constituting the generated quantum circuit into a combination of basis gates supported by the corresponding QPU to reconstruct it into an executable quantum circuit on the corresponding QPU; and a process of determining the operation time of the corresponding QPU required for executing the generated quantum circuit based on the operational execution time of each of the quantum gates constituting the reconstructed quantum circuit.

15. The computing device according to claim 10, wherein when the instructions are executed by the computing device, the computing device is configured to: monitor the execution of the generated quantum circuit on the selected QPU; and register the generated quantum circuit to the task queue of a different QPU if an unexpected error or delay is detected during monitoring.

16. The computing device according to claim 10, wherein, in the process of calculating the score, the score for each of the plurality of QPUs is calculated using a weighted sum of terms selected from the set of terms including the Expected Completion Time (ECT) of the corresponding QPU for the generated quantum circuit, the gate error rate of the corresponding QPU, and the cost of the corresponding QPU.
